Europäisches Patentamt

European Patent Office

Office européen des brevets

(11) Publication number: 0 230 071
A1

# (12) EUROPEAN PATENT APPLICATION

(21) Application number: 86202211.8

(22) Date of filing: 09.12.86

(51) Int. Cl.⁴: C25D 5/50 , C23C 30/00 , B29D 30/48

(30) Priority: 23.12.85 GB 8531623

(43) Date of publication of application:
29.07.87 Bulletin 87/31

(84) Designated Contracting States:
AT BE CH DE ES FR GB IT LI LU NL SE

(71) Applicant: N.V. BEKAERT S.A.
Bekaertstraat 2
B-8550 Zwevegem(BE)

(72) Inventor: Lievens, Hugo
Nederzwijnaardestraat 45
B-9710 Gent(BE)
Inventor: Coppens, Wilfried
Cyriel Verschaevestraat 7
B-8510 Kortrijk-Marke(BE)

(74) Representative: Ryckeboer, Leo et al
c/o N.V. BEKAERT S.A. Department Industrial
Property Leo Bekaertstraat 2
B-8550 Zwevegem(BE)

(54) Steel elements with brass alloy coatings for use in the reinforcement of vulcanised rubber articles.

(57) Steel elements for use in the reinforcement of vulcanised rubber products are provided with a brass alloy coating of low reactivity having a copper content of at least 55% by weight and a substantially homogeneous microcrystalline $\alpha$-brass structure.

The coating improves the adhesion retention between the steel elements and the vulcanised rubber matrix, particularly under conditions of high temperature and humidity.

Thermodiffusion methods for the production of suitable coatings are also described.

EP 0 230 071 A1

# STEEL ELEMENTS WITH BRASS ALLOY COATINGS FOR USE IN THE REINFORCEMENT OF VULCANISED RUBBER ARTICLES

The present invention relates to steel elements for use in the reinforcement of vulcanised rubber articles and in particular to brass coated steel elements such as steel wire or steel cord for use as metal reinforcements in high performance rubber applications such as in tires, hoses and the like.

Brass coated steel reinforcements for use in vulcanised rubber articles include single wires, cords and other wire products (e.g. wire fabrics), strips, flattened or otherwise shapes wires, etc. The term 'element' is intended to include all possible forms of such reinforcements.

The present invention is particularly concerned with the problem of achieving adequate adhesion retention between brass alloy coated steel reinforcing elements and the vulcanised rubber in which such reinforcing elements are incorporated, more especially where the reinforced articles concerned are subjected to ageing under high humidity and high temperature conditions. This problem is for example known to arise when brass alloy coated steel wire or cord is used for the reinforcement of rubber tires for vehicles, particularly when the brass alloy coating has been applied to the steel wire or cord by the technique of thermodiffusion.

It is well-known by those skilled in the manufacture of steel reinforced vulcanised rubber products, for example radial pneumatic tire manufacturers and the producers of brass alloy coated steel wires and cords therefor, that rubber-to-reinforcing element bond strength seldom remains at the initial level achieved at the time of manufacture. Poor adhesion re tention may for example considerably shorten the useful service life of radial pneumatic tires. It has been recognised that harsh driving conditions in which tires are subjected to the action of high humidity and heat can seriously affect the stability of the bond between the tire rubber matrix and the brass alloy coating of the reinforcing element. Initial adhesion may thus drop more or less rapidly to a variable lower level of residual adhesion which may be critically low and may indeed be inadequate for satisfactory functioning of the tire even after comparatively short periods of use.

In normal mild conditions the unavoidable decrease in adhesion strength may be expected to occur gradually. In practice, however, one frequently observes a steep fall in adhesion strength and/or sharp fluctuations in adhesion retention in apparently similar circumstances of use. This is particularly true of steel cords covered by a brass alloy diffusion coating where variations in adhesion strength and adhesion retention are observed with apparently identical reinforcing elements in identical circumstances. These irregularities and the consequent unpredictable shortening of tire life are a serious problem for the industry in view of the increasing use of brass alloy coatings applied by thermodiffusion techniques.

Unsatisfactory and/or inconsistent adhesion retention as a consequence of the effects of ageing under high humidity and high temperature conditions is normally explained by the phenomena of overcure, overreactivity and corrosion occuring in the brass alloy coating. According to certain experts bond weakening is mainly caused by degradation of the thin rubber to brass interface reaction layer, whereas other experts believe the cause to be the formation of harmful corrosion reaction products. Still others blame bond weakening on the overreactivity of the brass alloy coating leading to overcure degradation with undesirable progress of rubber/brass reactions.

To cope with this instability problem many steel cord manufacturers have tried to improve their processing reliability and to modify the brass coatings applied e.g. by adjustments to the copper-zinc composition and the thickness of such coatings. These measures have not however been sufficient to provide an adequate solution to the problem.

More recently, attempts have been made to improve adhesion retention under conditions of high humidity and heat by alloying the brass composition with a ternary alloying element such as cobalt or nickel.

Other attempts to provide better adhesion retention have largely been based on measures aimed at preventing or slowing down deleterious corrosion reactions in the brass alloy coating or in the wire surface, for instance by applying a corrosion resistant metal layer between the steel substrate and the brass alloy coating, by a specific modification of the composition of the brass coating (e.g. a use of corrosion inhibitors, etc.) or by otherwise enhancing the chemical stability of the brass coating.

Though the above-mentioned proposals may have some merit, none have provided a satisfactory solution to the delicate problem of adhesion retention. Thus, as well as involving the need for a rather complicated and generally more expensive brass coating and wire finishing operation, the adoption of such proposals may result in less compatibility with certain rubber compounds and may also provide reinforcing elements which fail to fulfil the requirements of a sufficient initial adhesion with the vulcanised rubber.

It is an object of the present invention to provide brass alloy coated steel reinforcing elements which can be readily produced, which have satisfactory adhesion properties when incorporated into vulcanised rubber products and which in particular provide a means of achieving adequate adhesion retention in use.

According to the present invention, there is provided a steel element for use in the reinforcement of vulcanised rubber products which is provided with a brass alloy coating having a copper content of at least 55% by weight, the said brass alloy coating having a substantially homogeneous α-brass microcrystalline grain structure such that the reactivity of the brass coating is less than 0.012 when estimated by the standard persulfate test as herein defined.

The reactivity will preferably be less than 0.010 and the steel elements will preferably give an APR - (appearance rating) of at least 2 on an APR-scale of 0 to 5 when subjected to a humidity ageing test as hereinafter described with ageing at 70°C and 95% relative humidity for 14 days.

The steel elements according to the invention are advantageously in the form of wires or cords for use in the reinforcement of tires and the following description is directed for the most part to brass alloy coated reinforcing wires or cords for this purpose. It will however be appreciated that the invention is of broad application and includes the provision of steel elements in other forms suitable for use in the reinforcement of vulcanised rubber articles in general including belts, hoses, etc. as well as tires.

The invention is generally but not exclusively applicable to the commonly used combinations of steel wire materials and (CuZn) brass alloy coatings employed for strengthening vulcanised rubber composites requiring a strong wire to rubber adhesion level. Such wire materials conveniently have a diameter of less than 2 mm and are provided with a brass alloy coating containing at least 55% copper (most often a binary Cu-Zn alloy, but not necessarily restricted thereto). The brass alloy coatings may thus optionally contain other ingredients e.g. a ternary alloying element such as cobalt or nickel.

A preferred embodiment of the present invention is concerned with brass alloy coated wires and cords for use in rubber tires. Steel cords embedded in tires (e.g. in belt or carcass plies, in the breaker, etc.) are commonly made from brass-coated deformed pearlitic steel wire of 0.60 to 1% C, which is wet-drawn to a final diameter of about 0.05 to 0.50 mm (preferably 0.10 to 0.40 mm) and has a final tensile strength of at least 2400 N/mm², preferably at least 2700 N/mm². Such wires are provided with a brass alloy coating containing from 55 to 75% Cu, preferably from 59 to 72% Cu and most preferably from 60 to 70% Cu. The coating thickness may conveniently be from 0.05 to 0.50 μm and is preferably from about 0.10 to about 0.40 μm, more preferably from 0,12 to 0.35 μm.

The brass alloy coating may be formed by alloy plating a suitable brass composition from a copper-zinc electroplating bath, or more preferably by sequentially plating distinct copper and zinc layers in appropriate proportions followed by a thermodiffusion treatment (e.g. in air) so as to cause mutual diffusion of copper and zinc thereby achieving a homogeneous α-brass coating. Thermodiffused brass has be come by far the most popular rubber adherent coating in the industries of tire cord production and radial pneumatic tire manufacture. The use of thermodiffusion techniques to provide a brass alloy coating having an α-brass microcrystalline grain structure and a reactivity as herein defined thus constitutes an important feature of the present invention.

In order to investigate the problem of loss of adhesion retention and to clarify the intricate aspects and fluctuating results observed in vulcanised tire rubber/cord composites exposed to subsequent humidity ageing, we have carried out extensive investigations and numerous correlation tests using a multiplicity of combinations involving different rubber compounds, different brass alloy coatings, different wire processing methods, etc. In these investigations we have used brass alloy coated steel wires of 0.28 mm diameter and cords of 2 + 2 x 0.28 mm (0.70 to 0.85% C steel) which were provided in most cases with a Cu-Zn thermodiffusion coating having a coating thickness varying from 0.15 to 0.35 μm and a composition of 60-70% Cu.

Actual adhesion testing was carried out on vulcanised cord/rubber samples (measurement of initial adhesion and cured humidity aged adhesion after different ageing times) according to the ASTMD 2630 - (APR-method) which measures the degree of rubber coverage (appearance rating) left on the cords after tearing apart the cord/rubber plies of the test samples. In addition, reactivity measurements were carried out on coated wire and cord samples using the standard persulfate test as hereinafter described. Similar samples were also exposed to specific chemical environments, simulating certain (aggressive) ingredients - (e.g. stearic acid) in rubber compounds and to conditions of heat and humidity ageing. The reactivity and simulation test results, revealing brass reactivity in selected media and conditions, were examined with reference to actual adhesion results. An unexpectedly good correlation was observed between degree of adhesion retention, brass reactivity and brass alloy structure of apparently identical cords and it is the discovery of this unexpectedly good correlation that is the basis for the present invention. It has thus surprisingly been discovered that the control of brass reactivity by adapting the brass alloy structure provides a means of improving the adhesion retention when brass coated steel reinforcing elements are incorporated into vulcanised rubber products.

In steel elements in accordance with the present invention, the brass alloy coating has a substantially homogeneous $\alpha$-brass microcrystalline structure whereby the reactivity of the brass coating is less than the maximum as hereinbefore defined. It will be appreciated that complete homogeneity of the structure of the brass alloy coating cannot be achieved and in particular that some local fluctuation in copper content as hereinafter referred to is inevitable. Similarly a grain structure with grains entirely within the preferred size ranges as hereinafter referred to cannot be achieved and small amounts of undesired, very small grains are likely to be present. In general such fluctuations in copper content and the presence of small amounts of undesired, very small grains can be tolerated in accordance with the present invention provided that the reactivity of the brass coating nonetheless remains at less than 0.012 when estimated by the standard persulfate test as herein defined.

According to a further feature of the present invention, there is provided a method of producing a steel element according to the invention as hereinbefore defined in the form of a wire, which method comprises drawing a steel wire of larger diameter which is provided with a brass alloy coating having an $\alpha$-brass microcrystalline grain structure with an average grain size of from 0.4 to 1.2 $\mu$m with a size distribution of individual grains from about 0.2 to about 2.0$\mu$m.

According to a preferred feature of the present invention, the brass alloy coating of the steel wire of large diameter is produced by sequential application of copper and zinc coatings followed by the steps of heating and then soaking in air for at least one second at a temperature of above 300°C whereby thermodiffusion to provide the brass alloy coating is effected. Soaking is preferably carried out for a period of from 2 to 10 seconds with the temperature of the wire being maintained at above 350°C.

According to one important aspect of the present invention the thermodiffused Cu-Zn coating before drawing possesses a substantially homogeneous single phase $\alpha$-structure characterized by a grain size distribution wherein the individual polygonal grains have a size substantially in the range of about 0.2 $\mu$m to about 2 $\mu$m with an average value of about 0.4 to about 1.2 $\mu$m. The structure thus contains only a minor amount, e.g less than 5%, of grains sizes below 0.2 $\mu$m with grains having a size of less than 0.1 $\mu$m being substantially absent. The microstructure of the brass alloy coating is furthermore preferably substantially free of grain boundary segregation of copper and zinc and also substantially free of $\beta$-phase with local fluctuations in copper content (expressed as standard deviation and related to bulk copper content) preferably being less than about 2-3%.

The thermodiffused Cu-Zn coating after drawing preferably has a compacted brass coating structure of uniform composi tion and a grain structure with grains ranging in size from about 0.04 to about 0.40 $\mu$m and averaging about 0.10 to about 0.20 $\mu$m. Such grain structures are thus essentially free (except for small amounts which may be present) of fine grain clusters in a size range of 0.002 to 0.04 $\mu$m. As with the wire prior to drawing, in the drawn wire local variations in copper concentration (expressed as standard deviation $\sigma$ and related to bulk copper content) are preferably less than 2-3% and grain boundary segregation of zinc and/or copper is essentially absent in the brass alloy coating.

The conventional thermodiffusion process used in the application of brass coatings on to steel reinforcing wires involves in-line direct resistance heating of moving coated wires up to a preset temperature selected within the range of about 500 to 700°C, which peak temperature is reached at the end of the heating zone in a time dependant on wire speed. This treatment gives a brass structure with a generally heterogeneous distribution of fine and coarse grains ranging from less than 0.04 $\mu$m to about 0.75 $\mu$m prior to drawing.

By simply increasing diffusion power and peak temperature the average grain size can be increased but the amount of fine grains mostly remains high, presumably because of unavoidable enhanced oxidation - (brass surface and even internal grains) which prevents uniform recrystallization and controlled grain growth. Increased risk of sparking and larger variations in brass microstructure between individual wires are additional drawbacks of simply increasing diffusion power.

A thermodiffusion treatment adapted to provide a microcrystalline grain structure in accordance with the present invention comprising a more homogeneous grain size distribution (preferably in the range of from 0.2 $\mu$m to 2.0 $\mu$m, more preferably 0.4 to 1.6 $\mu$m, prior to drawing) can be performed in several ways.

According to one process the normal direct resistance heating power or diffusion constant (depending on number of wires, wire diameter and speed) is adjusted to desired values and divided between a heating zone and a regulatable holding zone to effect a required soaking of at least 1 second (e.g. 2 to 10 seconds). The temperature during the heating and soaking steps preferably does not exceed 625°C and more preferably does not exceed 600°C.

In a second process of direct resistance heating the energized zone (i.e. the heating zone) is combined with a post-heating soaking zone, for instance a flat insulated tunnel of suitable length, which may or may not be provided with resistance heating elements, to prolong the time spent by the preheated wires at the required temperature and thereby to achieve the desired recrystallization structure in the brass. The tunnel may also if desired extend in the upstream wire direction so as to surround the highest temperature heating zone.

In a third process the wires are inductively heated in a flat inductor tunnel comprising individual wire channels, whereby said inductor is divided into at least two regulatable zones, respectively for heating and for postheating soaking.

As with the first process, the wire temperature during the heating and soaking steps of the second and third processes will also preferably not exceed 625°C and more preferably will not exceed 600°C. During the soaking step of process 1 and 2 the wire temperature will fall while desirably being maintained at above 300°C until the soaking step is completed. The second and third processes have the advantage that the wire temperature during soaking (or tempering) can be controlled and for example can if desired be maintained at an approximately constant level until the soaking step is completed. The maintenance of a constant soaking temperature may be useful in achieving a consistency of grain size in the brass alloy coating obtained. A residence time of about 5 to 9 sec. in a first heating zone to reach a peak temperature between 400° and 600°C, combined with a residence time of 4 to 10 sec. in a downstream soaking zone where temperature comes down to between 350° and 450°C will mostly be convenient to achieve the desired recrystallisation. As is generally known the particular electrical power, necessary to generate the suitable temperature, and the residence time have also to be adjusted i.a. to the particular wire diameter and coating thickness in view of achieving the desired diffusion and recrystallisation. Further, the ultimate grain size may depend also on the grain size in the separate Cu and Zn layer before diffusion. These grain sizes may depend on the current densities applied during the electrolytic deposition process of the layers.

The advantages of the above processes for producing the coating structure in accordance with this invention include the better control of heating profile and peak temperatures, which may be adjusted to lower values and hence provoke less grain oxidation and less variations in brass structure between individual wires. This feature combined with adequate soaking provides the desired structural improvement in a preferred range. Moreover the lower diffusion temperature combined with the soaking zone (which may further act as a kind of heat insulating chamber for the thermodiffusion zone) enables to economise on energy consumption and to avoid or minimise losses in wire tensile strength.

The steel elements according to the invention have generally advantageous properties for use as reinforcements in vulcanised rubber articles. Thus for example steel cord made from a plurality of steel wires according to the invention can be used with advantage as reinforcements for vehicle tires, e.g. pneumatic radial tires, and for such purposes can for example be incorporated into the belt, carcass, breaker or shoulder of the tire. In general the steel elements when used as such reinforcements will have good resistance to postcure loss of adhesion strength as a result for example of the effects of humidity, heat and ageing in service.

The specified reactivity of the improved brass alloy coating structure according to the invention is explained in the examples given below which illustrate the objects and advantages of the present invention and include the description of the specific test conditions for determining reactivity of the brass alloy coating.

## Example 1

Brass-plated cords (2 + 2 x 0.28 mm) having an average brass coating thickness of 0.21 $\mu$m with 63.6% Cu were twisted from wire (0.28 mm) which had been drawn from brassed semi-product (diameter 1.35 mm) thermodiffused to produce a conventional brass structure (I) or treated to form a coating structure in accordance with the invention (II).

The thermodiffused brassed semi-product (II) was produced by subjecting the wire while travelling at a speed of about 35-40 meters/minute to direct resistance heating to about 565°C over a 5 meter heating zone followed by soaking in a 3 meter holding zone in which the wire temperature fell from about 565°C to about 400 -450°C.

The semi-products I and II were wet drawn in different lubricants to 0.28 mm wire with the aim of separating possible side effects of lubricant chemistry (or roughness of coating surface or grain orientation therein after drawing) on the final brass surface reactivity which could affect adhesion retention in cured humidity ageing conditions.

The humidity ageing test referred to herein was performed as follows.

Adhesion testing (APR) was carried out on rubber/cord samples assembled from layered rubber plies containing a plurality of parallel cords and vulcanised at 145°C for 30 minutes. In this APR-adhesion test the horizontal plies constituting the vulcanised cord/rubber sample are torn apart so that the reinforcing cords become visible. The adhesion rating (APR-value) is determined by measuring the average rubber coverage of the exposed cords. On an APR-scale of 0 to 5 the maximum value of 5 corresponds to full coverage; zero to low coverage (bare cords) giving APR-values up to one correspond to very poor or poor adhesion. Initial adhesion rating is determined on vulcanised samples without ageing exposure.

The test is known as the strap peel test and is described in more detail in ASTM Specification D2630 for textile cords entitled 'Rubber Property : Adhesion to Fabrics'.

Cured humidity aged adhesion is carried out by repeating the APR-test on vulcanised samples which have been stored for a given time (7 days or 14 days) in humid conditions (95% relative humidity) at 70°C. Table 1 summarizes the adhesion results (in APR-units) after humidity ageing. Cord I is made of conventionally thermodiffused wire. Cord II consists of improved wires having a brass alloy coating according to the invention.

Table 1 : APR-adhesion ratings of cords 2 + 2 x 0.28

| Drawing procedure | Cord I | | Cord II | |
|---|---|---|---|---|
| | 7 days | 14 days | 7 days | 14 days |
| Lubricant 1 | 1-1.25 | 1 | 4.25-5 | 3-4.25 |
| Lubricant 2 | 1 | 0.5-1 | 4-4.5 | 2-3.5 |
| Lubricant 3 | 0.5-1 | 0-0.5 | 2.75-3 | 1.5-2 |
| Lubricant 4 | 1-1.5 | 0.5-1 | 4.75-5 | 3.5-4.25 |
| Lubricant 5 | 0-1 | 0 | 2.5-4 | 1-1.5 |

The results show that Cords II (having a brass coating of improved structure in accordance with the present invention) are markedly superior over conventionally brassed Cords I with respect to adhesion retention under humidity ageing conditions. All Cords I fail to pass the APR-requirement of at least 2. It can also be seen that certain drawing lubricants may give an adverse effect on originally good coating quality but the reverse is not the case, i.e. a poor initial quality cannot be upgraded by using drawing lubricants to modify brass surface chemistry. This points to the essential role of brass microstructure in controlling adhesion retention and avoiding or reducing undesired adhesion loss.

Example 2

In a second series of tests the cords 2 + 2 x 0.28 were provided with a brass coating of 0.24 μm containing about 68% Cu. The wires of Cord I were drawn from a conventionally processed semi-product - (normal thermodiffusion) whereas Cord II was composed of wires covered with a thermodiffused structure according to the invention. The brass coating in the two cases compared as follows :

I. Conventional brass alloy coating

grain size of diffused brass : < 0.05 to 0.9 μm (average ≦ 0.5 μm) with a substantial amount of heterogeneous clusters of very fine grains (« 0.1 m). After drawing to 0.28 mm the brass layer features an irregularly fragmented grain structure with an estimated size range of 0.005 to 0.15 m.
bulk copper content : 68.2%
average variations in local copper concentration (XMA + EPMA-analysis) : σ = 10.3 %

II. Brass alloy coating according to the invention

grain size : average 0.65 μm (0.3 -1.8 μm), homogeneous structure free of fine grain accumulations and irregular grain size mixtures.
after drawing : estimated average grain size of 0.12 -0.18 μm with individual grains of about 0.04 to 0.30 μm.
bulk copper content: 67.8% Cu.
local variations in Cu : σ 1.51 %

The wires of Example 2 were drawn in lubricants 1 and 2 of Example 1 (best conditions for adhesion retention) and assembled into cords of 2 + 2 x 0.28 mm construction.

The results of cured humidity testing are given below (test procedure as described in Example 1).

Table 2 : Cured humidity values

| Cord I | : | 7 days | : | 0.5 – 1.5 APR |
|--------|---|--------|---|---------------|
|        |   | 14 days | : | 0 – 1 APR |
| Cord II | : | 7 days | : | 3.25 – 4.5 APR |
|        |   | 14 days | : | 2 – 4 APR |

As can be seen the Cords II of the present invention have considerably improved adhesion retention as compared with Cord I.

As compared to Example 1, the adhesion retention values are slightly lower (given the higher Cu-content of the brass alloy coating employed).

Example 3

The reactivity of the brass alloy coatings of the wires and cords employed in Examples 1 and 2 were evaluated in a specially developed test which has been referred to above as 'the standard persulfate test as herein defined'. This test involves subjecting the cord wires to the action of a capillary flow of dilute aqueous ammoniacal ammonium persulfate solution (1% $NH_4OH$ + 0.12% $(NH_4)_2S_2O_8$, T = 25°C, t = 10 seconds) and measuring the amount of dissolved brass and its copper concentration. The test is conducted as follows :

A predetermined length of brass-coated filament (for example 6mm) is introduced into a glass capillary tube of suitable inner diameter (for example 1.5 to 2 mm for filament diameters of 0.20 -0.30 mm and typically 1.7 mm for wires of 0.20 to 0.25 mm diameter) and length (for example 7 mm) to be subjected therein to the attack of a laminar flow of an ammoniacal persulfate reagent in prescribed conditions. The standard

reagant for this purpose is an aqueous solution of 10 ml/l of NH₄OH (i.e. concentrated aqueous ammonia, commonly called "880 NH₃") and 12 ml/l of 10% $(NH_4)_2S_2O_8$. To perform the test a digital diluter containing said solution and provided with a 2.5 ml syringe is used, from which the standard solution is fed to the capillary tube having an extremity connected to a flexible supply tube of said diluter. A precise amount of solution is forced to flow over the inserted filament in laminar conditions by operating the diluter at a slow supply rate whereby the exposure time is about 10 seconds for an outflow of 2.5 ml.

The solution, having reacted with the brass surface, is collected in a micro-beaker. The test is repeated 5 times (each time with a new capillary tube and piece of filament). The total amount of spent solution in the microbeaker (ranging from about 10 to 12 ml, depending on the residual amount left in the capillary tube) is measured and acidified to the required degree by adding about the same amount of dilute aqueous HCl (0.24 N solution). In this acidified solution the copper and zinc contents (in ppm) are determined by atomic absorption spectrometry (AAS) from which results the proportional and total amounts of copper and zinc are calculated. The amount of dissolved brass is calculated and expressed in micrometers of removed layer thickness to give the reactivity R of the coating.

The reactivity of brass coatings as applied to other types of steel elements (e.g. other cross-sectional shapes) is assessed using a wire produced under identical conditions to the element, i.e. with a substantially identical brass coating.

Table 3 : Comparative reactivity evaluation in ammonium per-sulfate

| Dissolved brass amount | Normal Cords | | Cords according to the invention | |
|---|---|---|---|---|
| | 63.6% Cu | 68% Cu | 63.6% Cu | 68% Cu |
| thickness, μm | 0.016-0.020 | 0.020 | 0.002-0.006 | 0.003-0.010 |
| % Cu | 68.7 | 69.8 | 59-63 | 65-67 |

The reactivity (R) corresponds to the average thickness of dissolved brass (i.e. the average reduction in the thickness of the brass coating as a result of the test treatment) expressed in μm.

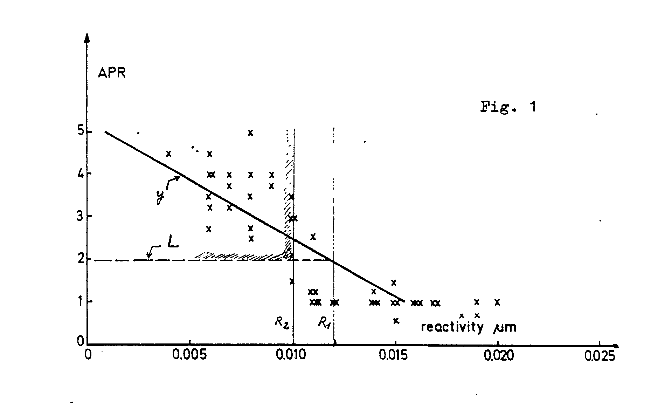

The results show that the cords with a brass alloy coating in accordance with the present invention have a markedly lower reactivity than conventional cords. The beneficial effect of restricting brass reactivity is illustrated in the accompanying drawing (Fig. 1). Curve y gives the relationship between APR-values of retained cord adhesion (14 days cured humidity at 70°C) and brass reactivity R in the persulfate test for a plurality of brassed cords (62 to 69% Cu; 0.15 to 0.30 μm brass thickness). Line L represents the lower limit of acceptable retained adhesion. Symbols R1 and R2 correspond to the upper maximum and preferred maximum values for coating reactivity. It will be noted that there is a sharp transition from good to bad cured adhesion retention for R-values exceeding 0.010-0.012 μm. The preferred coatings according to this invention are situated in the shaded area of the graph (APR ≥ 2; R < 0.010). Most preferred is the R-range ≤ 0.008 with APR-values of 2.5 to 5.

Example 4

In this example. conventional cords and cords according to the invention, each plated with a 0.24 μm thick brass layer of 63.5% Cu, were embedded into two different rubber compounds A and B (compound B being more sensitive to humidity ageing than compound A).

8

Coating characteristics :

Conventional Cord : $\alpha$-brass + traces $\beta$-phase ;
estimated average grain size $\leq$ 0.10 $\mu$m with substantial amounts of ultra-fine grains « 0.05 m;
local Cu-variations up to 6.7%
Cord according to the invention : homogeneous $\alpha$-brass;
estimated grain size range 0.10-0.32 $\mu$m; local Cu-variations : max. 1.30%.

Vulcanised cord/rubber samples (suitable for APR adhesion testing) were stored for up to 120 days in humidity ageing conditions (90% relative humidity -40°C). At regular intervals in the course of ageing samples were removed for determination of residual adhesion (APR-value). At the same time the cords were removed from the tested samples, and the residual brass alloy coating (expressed as a % of the "as vulcanised" brass layer) was measured. This gives an idea of progressive coating consumption with increasing humidity ageing time.

The results given in Table 4 below clearly illustrate that the cord with a brass alloy coating according to the present invention possesses a considerably improved adhesion retention.

Table 4 : Adhesion retention (APR-test) and residual brass amount (%) with humidity ageing (at 40°C and 90% relative humidity)

| Storage time (days) | Compound A | | | | Compound B | | | |
|---|---|---|---|---|---|---|---|---|
| | Conventional cord | | Cord according to the invention | | Conventional cord | | Cord according to the invention | |
| | APR | Coating % | APR | Coating % | APR | Coating % | APR | Coating % |
| 0 | 4.5 | 100 | 4.75 | 100 | 3.75 | 100 | 4.00 | 100 |
| 15 | 3.5 | 98 | 4.25 | 99 | 2.5 | 94 | 3-3.25 | 97 |
| 40 | 2.5-3 | 94 | 4.00 | 98 | 1-1.5 | 85 | 2.50 | 89 |
| 80 | 2.25 | 90 | 3.00 | 93 | 0-0.5 | 68 | 1.5-2.5 | 80-85 |
| 120 | 1.5 | 82 | 2.50 | 90 | 0 | 55 | 1-2 | 70-78 |

With the aim of further illustrating the superior behaviour of the cords according to the invention, a reactivity test was carried out in a specific environment which simulates the aggressive action of the fatty acid component present in most rubber vulcanisates. This simulation test involved storing brass plated wire pieces of cord according to the invention and conventional cord for 1 day in a mixture of parrafine + 0.5% stearic acid kept at 70°C and 95% relative humidity.

The results of coating loss are tabulated below.

10

Table 5 : Brass reactivity in paraffin + 0.5% stearic acid

brass corrosion rate

| | % coating loss | Cu/Zn ratio of reaction product |
|---|---|---|
| Conventional cord | 34 | 0.72 |
| Cord according to the invention | 20 | 0.53 |

The simulation test demonstrates that brass coated cords according to the invention are less sensitive to the attack of reactive rubber compounds. There is also a lower proportional consumption of copper which is indicative of the improved brass stability of cords according to the invention in humidity ageing conditions.

It will be apparent that a new and markedly improved brass alloy coating has been provided, suitable for the surface preparation of steel wires, steel cords and like reinforcing elements to enhance their post vulcanisation adhesion retention and stability in practical applications of wire (cord)/rubber composite products, in particular steel cord belted tires suitable for use in severe driving conditions.

Although this invention has been disclosed broadly and exemplified in terms of preferred embodiments mainly referring to steel wires and cords covered with a thermodiffused brass coating of a binary Cu-Zn alloy composition for use in rubber tires, it will be understood that changes can be made in the formulation of the brass composition and in the procedure of coating application, and also in the choice of wire and rubber material combinations and in the use of wire-cord/rubber composite products without departing from the invention.

**Claims**

1. A steel element for use in the reinforcement of vulcanised rubber products which is provided with a brass alloy coating having a copper content of at least 55% by weight, the said brass alloy coating having a substantially homogeneous α-brass microcrystalline grain structure such that the reactivity of the brass coating is less than 0.012 when estimated by the standard persulfate test as herein defined.

2. A steel element as claimed in claim 1 wherein the brass alloy coating has a copper content of from 60 to 70%.

3. A steel element as claimed in claim 1 or claim 2 wherein the brass coating reactivity is less than 0.010.

4. A steel element as claimed in any of the preceding claims which gives an APR rating of at least 2 on an APR-scale of 0 to 5 when subjected to a humidity ageing test as hereinafter described with ageing at 70°C and 95% relative humidity for 14 days.

5. A steel element as claimed in any of the preceding claims wherein the structure of the brass alloy coating has an average grain size of from 0.10 to 0.20 μm with a size distribution of individual grains from about 0.04 to about 0.40 μm.

6. A steel element as claimed in any of the preceding claims wherein local variations in copper concentration (expressed as standard deviation σ related to bulk copper content) are less than 2% and grain boundary segregation of zinc and/or copper is essentially absent in the brass alloy coating.

7. A steel element as claimed in any of the preceding claims wherein the brass coating is one which has been applied by sequential plating of copper and zinc on to the steel element followed by thermodiffusion to form a substantially homogeneous coating of the brass alloy.

8. A steel element as claimed in any of the preceding claims in the form of steel wire having a diameter of not more than 0.5 mm, a tensile strength of at least 2400 N/mm² and a brass alloy coating having a thickness of less than 0.5 μm.

9. A steel element as claimed in claim 8 wherein the steel wire has a diameter of from 0.1 to 0.4 mm, a tensile strength of at least 2,700 N/mm² and a brass alloy coating having a thickness of from 0.10 to 0.40 μm.

10. A method of producing a steel element as claimed in any of the preceding claims in the form of a wire, which method comprises drawing a steel wire of larger diameter which is provided with a brass alloy coating having an α-brass microcrystalline grain structure with an average grain size of from 0.4 to 1.2 μm with a size distribution of individual grains from about 0.2 to about 2.0 mm.

11. A method as claimed in claim 10 wherein local variations in copper concentration (expressed as standard deviation σ related to bulk copper content) are less than 2% and grain boundary segregation of zinc and/or copper is essentially absent in the brass alloy coating of the steel wire of large diameter.

12. A method as claimed in claim 10 or claim 11 wherein the brass alloy coating of the steel wire of larger diameter is produced by sequential application of copper and zinc coatings followed by the steps of heating and then soaking for at least one second at a temperature of above 300°C whereby thermodiffusion to provide the brass alloy coating is effected.

13. A method as claimed in claim 12 wherein soaking is effected for a period of from 2 to 10 seconds.

14. A method as claimed in claim 13 wherein the wire has a residence time of about 5 to 9 sec. in the first heating zone to reach a peak temperature of between 450° and 600°C combined with a residence time of 4 to 10 sec. in a downstream soaking zone where temperature comes down to between 350° and 450°C.

15. A steel cord for use as a reinforcing element which comprises a plurality of steel wires as claimed in any of claims 1 to 9 or of steel wires produced by a method as claimed in either of claims 10 and 11.

16. Vulcanised rubber articles containing steel elements as claimed in any of claims 1 to 9 and 15 as reinforcements.

17. Rubber tires containing steel cords as claimed in claim 15 as reinforcements.

18. Tires as claimed in claim 17 in the form of pneumatic radial tires.

Fig. 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| P,X | EP-A-0 179 517 (N.V. BEKAERT) <br> * Pages 12,13, example 1; claims 1-16 * | 1-18 | C 25 D 5/50 <br> C 23 C 30/00 <br> B 29 D 30/48 |
| Y | US-A-4 502 895 (A.V. TRUBITSYN et al.) <br> * Column 1, lines 20-33,58 - column 2, line 2; column 6, lines 1-65; claim 10 * | 1-18 | |
| Y | FR-A-1 174 055 (MICHELIN) <br> * Whole document * | 1-18 | |
| Y | FR-A-2 426 562 (BEKAERT) <br> * Page 5, line 31 - page 7, line 1; claims 1,4,8-11 * | 14 | |
| Y | DE-A-2 856 325 (TOKYO ROPE Mfg. CO.) <br> * Claim 11; page 7, line 16 - page 12, line 22 * | | TECHNICAL FIELDS SEARCHED (Int. Cl.4) <br><br> C 25 D <br> B 29 H <br> C 23 C <br> B 60 C <br> B 29 D |

The present search report has been drawn up for all claims

| Place of search | Date of completion of the search | Examiner |
|---|---|---|
| THE HAGUE | 31-03-1987 | SCHRUERS H.J. |